# EUROPÄISCHE PATENTSCHRIFT

(11) **EP 2 771 612 B1**
(45) Veröffentlichungstag und Bekanntmachung des Hinweises auf die Patenterteilung: **02.12.2020**
(21) Anmeldenummer: 12778100.3
(22) Anmeldetag: 23.10.2012
(51) Int. Cl.: F21S 41/14, F21S 41/16, F21S 41/24, F21S 43/14, G02B 6/00, F21V 8/00

(54) **BELEUCHTUNGSEINRICHTUNG FÜR EIN KRAFTFAHRZEUG**
LIGHTING DEVICE FOR A MOTOR VEHICLE
DISPOSITIF D'ÉCLAIRAGE DESTINÉ À UN VÉHICULE AUTOMOBILE

(30) Priorität: 28.10.2011 DE 102011085385
(43) Veröffentlichungstag der Anmeldung: 03.09.2014
(73) Patentinhaber: Bayerische Motoren Werke Aktiengesellschaft, 80809 München (DE)
(72) Erfinder: ERDL, Helmut, 83126 Flintsbach (DE); HANAFI, Abdelmalek, 80686 München (DE)
(86) Internationale Anmeldenummer: PCT/EP2012/070939
(87) Internationale Veröffentlichungsnummer: WO 2013/060665

(56) Entgegenhaltungen:
- EP-A2- 0 940 625
- WO-A1-2006/007109
- DE-A1- 10 214 505
- GB-A- 2 323 661
- JP-A- 2010 232 044
- US-A- 5 791 757
- US-A1- 2011 148 280
- US-A1- 2011 249 460

## Beschreibung

Die Erfindung betrifft eine Beleuchtungseinrichtung für ein Kraftfahrzeug.

Heutzutage kommen in Kraftfahrzeugen vermehrt LED-Beleuchtungseinrichtungen zum Einsatz, mit denen geeignete Lichtverteilungen für Signalleuchten bzw. Scheinwerfer des Fahrzeuge generiert werden.

LEDs werden in Kraftfahrzeugen auch in Kombination mit Lichtleitern verwendet, in welche das Licht der LEDs eingekoppelt wird und durch den Lichtleiter geleitet wird. Dabei ist in Längsrichtung des Lichtleiters eine Auskoppelfläche ausgebildet, welche Licht Im Lichtleiter ablenkt, so dass das Licht Ober eine Austrittsfläche des Lichtleiters austritt. In der Druckschrift DE 10317 062 A1 ist eine LED-Beleuchtungseinrichtung mit einem Lichtleiter gezeigt, wobei In dieser Beleuchtungseinrichtung die Auskoppelfläche mit der Lichtaustrittsfläche zusammenfällt. Mit dieser Beleuchtungseinrichtung kann eine sich in Längsrichtung des Lichtleiters erstreckende Lichtverteilung generiert werden. Aufgrund der geringen Leuchtdichte der zur Lichterzeugung verwendeten LEDs können jedoch nur Lichtleiter mit begrenzter Länge und/oder einer minimalen Querschnittsfläche eingesetzt werden.

Eine Beleuchtungseinrichtung für Fahrzeuge die die Merkmale des Oberbegriffs des Anspruchs 1 aufweist, ist z.B. aus US 5 791 757 A bekannt.

Aufgabe der Erfindung ist es, eine Beleuchtungseinrichtung für ein Kraftfahrzeug zu schaffen, mit der effizient eine Lichtverteilung unter Verwendung eines Lichtleiters generiert werden kann.

Diese Aufgabe wird durch die Beleuchtungseinrichtung gemäß Patentanspruch 1 gelöst. Weiterbildungen der Erfindung sind in den abhängigen Ansprüchen definiert

Die erfindungsgemäße Beleuchtungseinrichtung ist für ein Kraftfahrzeug, Insbesondere für einen PKW und gegebenenfalls auch für einen LKW, vorgesehen. Die Einrichtung umfasst einen Lichtleiter zur totalreflektierenden Leitung von Ucht entlang einer Lichtausbreitungsrichtung, wobei das Licht von zumindest einer Lichtquelle stammt, die Bestandteil der Beleuchtungseinrichtung ist. Das Licht wird dabei Ober zumindest eine Einkoppelfläche an einer Stirnseite des Lichtleiters eingekoppeit, wobei der Lichtleiter ferner eine entlang der Lichtausbreitungsrichtung angeordnete Auskoppelfläche zum Auskoppeln von Licht aus dem Lichtleiter umfasst, so dass das ausgekoppelte Licht an einer enlang der Lichtausbreitungsrichtung angeordneten Austrittsfläche unter Aufhebung der Totalreflexionsbedingung aus dem Lichtleiter austritt. Die Aulkoppelfläche und die Austrittsfläche weisen somit auch eine Ausdehnung quer zur Lichtausbreitungsrichtung auf. Der Lichtleiter ist vorzugsweise länglich und ggf. stabförmig ausgestaltet, wobei die Längsrichtung des Lichtleiters in diesem Fall der Lichtausbreitungsrichtung entspricht. Die erfindungsgemäße Beleuchtungseinrichtung zeichnet sich dadurch aus, dass zumindest eine Lichtquelle, deren Licht Ober die zumindest eine Einkoppelfläche einkoppelbar ist, eine Laserlichtquelle ist. Diese Laserlichtquelle erzeugt vorzugsweise monochromatisches Licht.

Die Verwendung einer Laserlichtquelle in Kombination mit Lichtleitern weist den großen Vorteil auf, dass aufgrund der hohen Leuchtdichte der Laserlichtquelle das Licht Ober weite Strecken im Leiter mit ausreichender Intensität ausgekoppelt werden kann. Ferner können Lichtleiter mit geringem Querschnitt in der Beleuchtungseinrichtung verbaut werden.

Der Lichtleiter der erfirdungsgemäßen Beleuchtungseinrichtung kann verschieden ausgeführt sein. Insbesondere kann der Lichtleiter genauso ausgestaltei sein wie in der Beleuchtungseinrichtung der Druckschrift DE 103 17 062 A1. Der gesamte Offenbarungsgehalt dieser Druckschrift wird durch Verweis zum Inhalt der vorliegenden Anmeldung gemacht.

In einer besonders bevorzugten Ausführungsform ist die Laserlichtquelle der Beleuchtungseinrichtung eine punktförmige Lichtquelle und/oder es ist eine Wandlereinrichtung zur Wandlung des Lichts der Laserlichtquelle in eine punktförmige Lichtquelle vorgesehen, wobei die Wandlereinrichtung insbesondere eine Vorsatzoptik und/oder eine Phosphorkonvertierungsschicht umfasst, welche aus monochromatischem Laserlicht eine punktförmige Weißlichtquelle oder eine punktförmige Lichtquelle mit einer anderen Wellenlänge als das Laserlicht generiert. Phosphorkonvertierungsechichten sind an sich aus dem Stand der Technik bekannt. Beispielsweise kann bei einer blauen Laserlichtquelle mit einer Emissionswellenlänge von 450 nm eine Phosphorkonvertierungsschicht aus Ce:YAG-Phosphor zur Generierung von Weißlicht verwendet werden. Für violettes Laserlicht mit einer Wellenlänge von 405 nm kommt insbesondere eine Phosphorkonvertierungsschicht aus aus Cerium-dotiertem Nitrid-Phosphor oder Cerium-dotiertem Oxinitrid-Phosphor zum Einsatz.

Unter einer punktförmigen Lichtquelle im Sinne der Erfindung ist eine Lichtquelle mit einer sehr geringen strahlenden Fläche zu verstehen, welche In Bezug auf die Abmessungen der Beleuchtungseinrichtung in sehr guter Näherung als punktförmig dergestalt angenommen werden kann, dass alle Strahlen der Lichtquelle von einem einzelnen Punkt ausgehen. Die maximale Ausdehnung der punktförmigen Lichtquelle In Draufsicht, d.h. gesehen in Hauptstrahlrichtung mit größter Intensität der Lichtquelle, beträgt 20 µm oder weniger. Ferner weist die punktförmige Lichtquelle in Draufsicht vorzugsweise eine emittierende Fläche von 0,5 mm² oder weniger auf, insbesondere von 0,01 mm² oder weniger und besonders bevorzugt von 0,0002 mm² oder weniger. Die punktförmige Lichtquelle umfasst insbesondere eine emittierende eckige Fläche, deren Kanten jeweils eine Länge von 500 µm oder weniger und vorzugsweise 20 µm oder weniger aufweisen. Nichtsdestotrotz kann die punktförmige Lichtquelle auch eine runde emittierende Fläche umfassen. Die punktförmige Lichtquelle mit den soeben beschriebenen Ausdehnungen ist dabei vorzugsweise derart ausgestaltet, dass sie einen Lichtstrom von 100 Lm oder mehr und insbesondere von 200 Lm oder mehr generiert und/oder eine Strahlleistung von 1 Watt oder mehr und/oder eine Leuchtdichte von mindestens 10⁸ Cd/m² und insbesondere von 10⁹ Cd/m² oder mehr aufweist. Solche punktförmigen Lichtquellen können nur mit Laserlicht, z.B. unter Verwendung von Laserdioden, erreicht werden.

In einer besonders bevorzugten Ausführungsform wird das Licht der Laserlichtquelle und insbesondere der punktförmigen Lichtquelle an der zumindest einen Einkoppelfläche des Lichtleiters mit einem Kollimator in ein kollimiertes Lichtbündel gewandelt. Der Kollimator kann dabei durch eine gewölbte Stirnseite gebildet sein, an der das Licht der punktförmigen Laserlichtquelle gebeugt oder reflektiert wird. Die gewölbte Stirnseite kann eine transmittierende Linse bilden, auf welche das Licht einer außerhalb des Lichtleiters vorgesehenen Laserlichtquelle fällt. Ebenso besteht gegebenenfalls die Möglichkeit, dass die Laserlichtquelle in dem Lichtleiter, z.B. in einer Aussparung an der Einkoppelfläche, angeordnet Ist und in Richtung zur durch die Einkoppelfläche gebildeten Grenzfläche zwischen Lichtleiter und umgebendem Medium strahlt, wobei das Licht an dieser Grenzfläche reflektiert wird und als kollimiertes Lichtbündel zurück in den Lichtleiter geleitet wird.

In einer weiteren Ausführungsform ist die erfindungsgemäße Beleuchtungseinrichtung derart ausgestaltet, dass Ober eine Vorsatzoptik aus dem Licht der Laserlichtquelle ein kollimierter Laserstrahl erzeugt wird. Dabei können die Laserlichtquelle und die Vorsatzoptik gegebenenfalls eine Einheit zur Generierung des Laserstrahls bilden, welche herkömmlicherweise auch als Laser bezeichnet wird. Der kollimierte Laserstrahl wird dabei über die vorzugsweise plane Einkoppeifläche in den Lichtleiter eingekoppelt, wobei der Laserstrahl vorzugsweise Ober eine Strahlumlenkung zur Einkoppelfläche geleitet wird. Auf diese Weise kann sehr flexibel das Licht einer Laserlichtquelle ausgehend von verschiedenen Positionen in den Lichtleiter eingekoppelt werden. Hierdurch kann vorhandener Bauraum im Fahrzeug effizient genutzt werden. Ferner wird Ober das Laserlicht ein Strahlbündel mit hoher Leuchtdichte generiert, weiches auch in Lichtleitern mit kompakten Abmessungen und insbesondere mit geringem Querschnitt eingekoppelt und dort Ober weite Strecken geleitet werden kann.

in einer weiteren, besonders bevorzugten Ausführungsform ist die Laserlichtquelle und insbesondere die punktförmige Lichtquelle eine Laserdiode. Vorzugsweise ist die Laserlichtquelle eine monochromatische Lichtquelle, deren Licht durch eine Phosphorkonvertierungsschicht in Weißlicht oder in Licht mit einer anderen Wellenlänge als das Licht der monochromatischen Lichtquelle gewandelt wird, wobei die Phosphorkonvertierungsschicht insbesondere vor der Stirnseite des Lichtleiters angeordnet ist und/oder In einer Aussparung des Lichtleiters angebracht ist und/oder an der Auskoppelfläche des Lichtleiters ausgebildet ist. Die Phosphorkonvertlerungsschicht kann ggf. auch die Auskoppelfläche bilden und/oder nach der Auskoppelfläche außerhalb des Lichtleiters angebracht sein.

In einer weiteren, besonders bevorzugten Ausführungsform weist die Auskoppelfläche ein Umlenkmittel und insbesondere eine Prismenanordnung oder eine aufgeraute Oberfläche auf, Ober welches auf die Auskoppelfläche treffendes Licht im Lichtleiter zur Austrittsfläche umgelenkt wird. Die aufgeraute Oberfläche kann dabei analog wie in dem Lichtleiter der Druckschrift DE 103 17 062 A1 ausgestaltet sein.

In einer besonders bevorzugten Ausführungsform ist das Umlenkmittel derart susgestaltet, dass die Intensität des Ober die Austrittsfläche austretenden Lichts Ober die Lichtausbreitungsrichtung bzw.Längsrichtung des Lichtleiters im Wesentlichen konstant bleibt, was z.B. durch eine kontinuierliche Verbreiterung der Ausdehnung der Prismenanordnung oder der aufgerauten Fläche quer zur Lichtausbreitungsrichtung bei zunehmendem Abstand von der Einkoppelfläche erreicht werden kann.

In einer weiteren bevorzugten Ausführungsform der erfindungsgemäßen Beleuchtungseinrichtung ist die Austrittsfläche des Lichtleiters derart gewölbt, dass kollimiertes Licht aus der Austrittsfläche austritt. Es kann jedoch auch eine (zusätzliche) Umlenkanordnung, insbesondere in der Form eines Reflektors und/oder einer Linse, vorgesehen ist, welche aus dem aus der Austrittsfläche austretenden Licht kollimiertes Licht erzeugt. Insbesondere kann dabei die in der Druckschrift DE 103 17 062 A1 beschriebene Umlenkanordnung verwendet werden.

Je nach Ausgestaltung kann die Beleuchtungseinrichtung einen Lichtleiter mit rechteckigem oder rundem Querschnitt aufweisen. Vorzugsweise ist dabei die maximale Ausdehnung des Querschnitts 10 mm oder weniger. Der Lichtleiter kann jedoch auch derart ausgestaltet sein, dass eine Kante im rechteckigen Querschnitt des Lichtleiters eine Länge von 10 mm oder mehr aufweist, wohingegen die andere Kante eine Länge von 4 mm oder weniger aufweist, so dass ein flächenförmiger Lichtleiter gebildet wird. Der Lichtaustritt erfolgt dabei insbesondere im Wesentlichen senkrecht zur längeren und im Wesentlichen parallel zur kürzeren Kante. Somit können besonders flache Lichtleiter in der erfindungsgemäßen Beleuchtungseinrichtung zum Einsatz kommen.

Die erfindungsgemäße Beleuchtungseinrichtung kann zur Generierung beliebiger Lichtverteilungen vorgesehen sein. Vorzugsweise wird die Beleuchtungseinrichtung dabei als Signalleuchte verwendet, wie z.B. als Tagfahrlicht und/oder als Markierungslicht und/oder als Abbiegelicht und/oder als Blinklicht und/oder als Heckleuchte und/oder als Bremslicht. Gegebenenfalls kann die Beleuchtungseinrichtung Jedoch auch einen Scheinwerfer zur aktiven Beleuchtung der Umgebung des Fahrzeugs bilden, wie z.B. ein Abblendlicht oder ein Fernlicht.

In einer weiteren Variante der erfindungsgemäßen Beleuchtungseinrichtung sind die Auskoppelfläche und die Austrittsfläche identisch, wie dies auch in der Beleuchtungseinrichtung der DE 103 17 062 A1 der Fall ist.

Neben der oben beschriebenen Beleuchtungseinrichtung betrifft die Erfindung ferner ein Kraftfahrzeug, welches eine oder mehrere der erfindungsgemäßen Beleuchtungseinrichtungen umfasst.

Ausführungsbeispiele der Erfindung werden nachfolgend anhand der beigefügten Figuren detailliert beschrieben.

Es zeigen:
- Fig. 1: eine schematische Seitenansicht einer Ausführungsform einer erfindungsgemäßen Beleuchtungseinrichtung mit Laserdiode und Lichtleiter;
- Fig. 2: eine vergrößerte Seitenansicht einer Abwandlung der Ausführungsform der Fig. 1 im Bereich der Einkoppelfläche;
- Fig. 3: eine Querschnittsdarstellung des in Fig. 1 gezeigten Lichtleiters; und
- Fig. 4: eine Querschnittsdarstellung einer Abwandlung des in Fig. 1 gezeigten Lichtleiters.

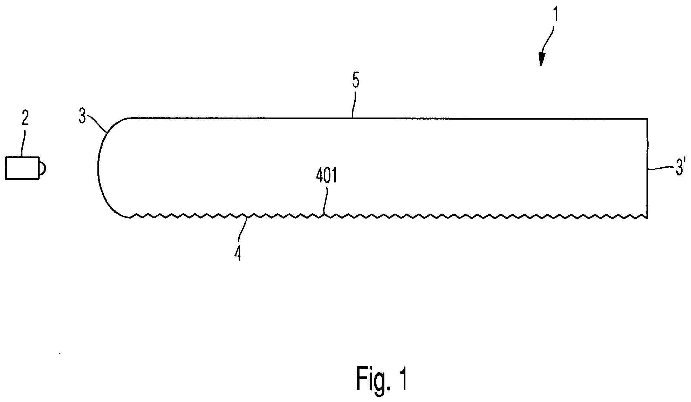

Nachfolgend wird eine Auführungsform der erfindungsgemäßen Beleuchtungseinrichtung basierend auf einem Lichtleiter 1 mit rechteckigem Querschnitt erläutert. Dieser Lichtleiter ist Fig. 1 in Seitenansicht wiedergegeben. Der Lichtleiter besteht in an sich bekannter Weise aus transmissivem Material, z.B. Polycarbonat oder Plexiglas, und umfasst zwei Stirnseiten 3 bzw. 3', wobei die Stirnseite 3 als Einkoppelfläche dient, Ober weiche das Licht einer Laserdiode 2 in den Lichtleiter geleitet wird. Erfindungswesenitich ist es dabei, dass Laserlicht zur Einkopplung in den Lichtleiter verwendet wird. Auf diese Weise wird es möglich, Lichtquelien mit sehr hoher Leuchtdichte in der Beleuchtungseinrichtung zu verbauen und hierdurch eine kompakte Beleuchtungseinrichtung mit hoher Lichteffizienz zu schaffen. Die Laserdiode 2 kann Im Vergleich zu den Abmessungen und insbesondere dem Querschnitt des Lichtleiters als im Wesentlichen punktförmig angesehen werden, d.h. die von der Lichtquelle ausgehende Strahlung geht in sehr guter Näherung von einem einzigen Punkt aus. Die Einkoppelfläche 3 bildei durch ihre gewölbte Form eine Linse, in deren Brennpunkt die Laserdiode 2 angeordnet ist. Als Folge wird in den Lichtleiter ein kollimiertes Laserbündel eingeleitet. Die Kollimation des Bündels ist dabei aufgrund der geringen Ausdehnung der Laserdiode sehr hoch. Durch die geringe Ausdehnung der Lichtquelle können insbesondere bei planen Querschnittsflächen die Einkoppelverluste minimiert werden.

In der Ausführungsform der Fig. 1 ist an der Unterseite 4 dee Lichtleiters 1 eine Anordnung aus einer Vielzahl von Prismen 401 vorgesehen, wohingegen die gegenüberliegende Fläche 5 des Lichtleiters plan ist. Die Fläche 4 bildet dabei eine Auskoppelfläche für das Laserlicht, welches über die Austrittsfläche 5 aus dem Lichtleiter austritt. In herkömmlichen Lichtleitern, bei denen auch die Fläche 4 plan ist, wird Licht z.B. zum Datentransport über Totalreflexion an den Flächen 4 oder 5 durch den Lichtleiter geleitet. Im Unterschied hierzu wird Ober die Prismenanordnung 401 ein Umlenken der die Prismen streifenden Strahlen in Richtung hin zu der Austrittsfläche 5 erreicht. Der Winkel, in dem die umgelenkte Strahlung auf die Austrittsfläche 5 trifft, ist dabei kleiner als der Totalreflexionswinkel, so dass die Strahlung über die Austrittsfläche 5 den Lichtleiter verlässt.

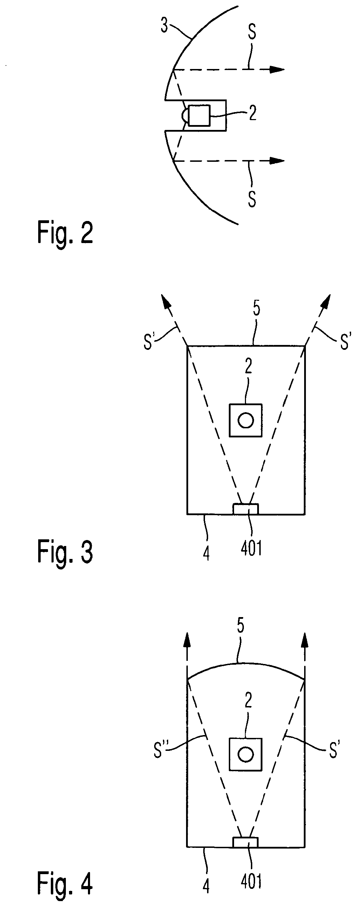

Die Anordnung der Prismen 401 ist derart ausgestaltet, dass der prozentuale Anteil des ausgekoppelten Lichts von der Einkoppelfläche 3 hin zur gegenüberliegenden Stirnseite 3' derart zunimmt, dass der absolute ausgekoppelte Anteil konstant bleibt und somit entlang der Längsrichtung des Wellenleiters Licht konstanter Intensität austritt. Durch den zunehmenden prozentualen Anteil des ausgekoppelten Lichts wird der Tatsache Rechnung getragen, dass die Lichtintensität aufgrund der fortschreitenden Auskopplung Ober die Prismen in Längsrichtung des Lichtleiters abnimmt, so dass zur Erreichung der gleichen Intensität ein immer größerer prozentualer Anteil des Lichts ausgekoppelt werden muss. Um eine Zunahme des prozentual ausgekoppelten Lichtantells zu erreichen, kann beispielsweise die Ausdehnung der Prismen senkrecht zur Blattebene der Fig. 3 mit zunehmendem Abstand zur Einkoppelfläche zunehmen. Ebenso können die Flanken der Prismen in geeigneter Weise zunehmen.

Die Auskopplung des Lichts Ober Prismen Ist lediglich eine mögliche Variante. Insbesondere kann die Oberfläche der Auskoppelfläche 4 auch aufgeraut sein und sich dabei mit zunehmendem Abstand von der Einkoppeifläche immer weiter vergrößem, wie dies in der Druckschrift DE 103 17 062 A1 beschrieben ist Der Lichtleiter dieser Druckschrift unterscheidet sich von dem hier beschriebenen Lichtleiter dahingehend, dass die Auskoppelfläche und die Austrittafläche zusammenfallen und sich auf der Oberseite des Lichtleiters befinden. Diese Realisierung kann gegebenenfalls auch in dem erfindungsgemäßen Lichtleiter umgesetzt werden.

in der Ausführungsform der Fig. 1 tritt das ausgekoppeite Licht Ober die Austrittsfläche 5 in verschiedenen Richtungen aus, was in Fig. 3 nochmals ersichtlich wird, welche eine Querschnittsansicht gesehen von der Stirnseite 3' wiedergibt Der Querschnitt wurde dabei in einem Bereich in der Nähe der Einkoppelfläche 3 gebildet, was dadurch ersichtlich wird, dass in diesem Bereich die Ausdehnung der Prismen 401 in horizontaler Richtung auf der Auskoppelkfläche 4 relativ klein ist. Ferner erkennt man, dass sowohl die Auskoppelfäche 4 als auch die Austrittsfläche 5 plan sind. Dies hat zur Folge, dass an den Prismen reflektierte Strahlung In verschiedener Richtung aus dem Lichtleiter Ober die Austrittsfläche 5 heraustritt, was durch den Strahlverlauf S' in Fig. 3 beispielinaft angedeutet ist Um aus diesem austretenden Licht ein koltimiertes Lichbündel zu erzeugen, wird in einer besonders bevorzugten Ausführungsform ein Reflektor mit wenigstens bereicheweise parabelartigem Krümmungsprofil eingesetzt, in dessen Brennlinie der Lichtleiter 1 gesetzt wird. Dabei kann der In der Drackschrift DE 103 17 062 A1 gezeigte Reflektor verwendet werden.

Wie anhand von Fig. 1 erläutert wurde, fällt das Licht der Laserdiode 2 von außen auf die Außenseite der gewöbten Einkoppolfläche 3, die aufgrund der Wölbung ein paralleles Strahlenbündel generiert Fig. 2 zeigt eine Abwandlung dieser Ausführungsform. In dieser Figur ist in vergrößerter Seitenansicht der Bereich der Einkoppelfläche 3 wiedergegeben. im Unterschied zu Fig. 1 ist die Laserdiode 2 nunmehr In einer zentralen Bohrung im Lichtleiter 1 positioniert und strahlt im Vergleich zu Fig. 1 in die entgegengesetzte Richtung. Dabei wird das Licht der Laserdiode an der Innenseite der Einkoppelfäche 3 reflektiert, wobei in Analogie zur Ausführungsform der Fig. 1 wiederum ein paralleles Strahlenbündel erzeugt wird, was durch den Strahlvarlauf S wiedergegeben ist.

Fig. 4 zeigt eine Ansicht analog zu Fig. 3 von einer alternativen Ausführungsform des erfindungsgemäßen Lichtleiters. Der Lichtleiter unterscheidet sich dabei von dem Leiter der Fig. 3 darin, dass die Uchtaustrittfläche 5 nunmehr gekrümmt ausgestaltet Ist, wodurch wiederum eine Linse gebildet wird. In der Brennebene dieser Linse befindet sich dabei die Einkoppelfläche 4, was zur Folge hat, dass die aus der Fläche 5 austretende Strahlung ein kollimiertes Strahlbündel bildet, was durch den Strahlverfauf S" angedeutet ist. In dieser Variante der Erfindung kann auf einen zusätzlichen Reflektor zur Kollimation der austretenden Strahlung vernichtet worden und hierdurch der Bauraum der Beleuchtungseinrichtung Im Fahrzeug vermindert werden.

Je nach Anwendungsfall können die räumlichen Erstreckungen des Lichtleiters der Fig. 1 unterschiedlich sein. Aufgrund der Verwendung einer Laserlichtquelle können besonders lange Lichtleiter von 50 cm und mehr geschaffen werden. Ebenso kann der Querschnitt des Lichtleiters sehr klein gewählt werden. Es sind dabei sowohl rechteckförmige als auch runde Querschnitte möglich. In der In Fig. 3 bzw. Fig. 4 gezeigten Variante des Lichtleiters kann dieser z.B. eine Höhe von 8 mm oder weniger und die Breite von etwa 3 mm oder weniger, beispielsweise 2 mm, aufweisen. Demgegenüber weist die strahlende fläche der Laserdiode lediglich einen Querschnitt von in etwa 0,0002 mm² auf.

Die soeben beschriebene Beleuchtungseinrichtung kann im Kraftfahrzeug verschiedene Funktionalitäten übernehmen. Sie kann als Signalleuchte zur Signalgebung für andere Verkehrsteilnehmer bzw. gegebenenfalls auch als Scheinwerfer zur aktiven Beleuchtung der Umgebung des Kraftfahrzeugs eingesetzt werden. Die bevorzugte Verwendung ist jedoch als Signalleuchte. Vorzugsweise wird dabei Ober die Laserlichtquelle bzw. die Laserdiode monochromatisches Licht erzeugt, z.B. rotes Licht, das dann in dieser Farbe aus dem Lichtleiter Ober seine Austrittsfläche austritt. Gegebenenfalls besteht auch die Möglichkeit, dass das monochromatische Ucht der Laserlichtquelle Ober eine geeignete Phosphorkonvertierungsschicht in eine andere Farbe oder In Weißlicht gewandelt wird. Die Phosphorkonvertierungsschicht kann z.B. vor der Einkoppelfläche positioniert sein. Das Licht der Laserdiode trifft dabei Ober eine fokussierende Optik auf die Phosphorkonvertierungeschicht, wodurch auf dieser Schicht eine punktförmige Lichtquelle generiert wird, deren Licht anschließend in den Lichtleiter eintritt. Gegebenenfalls kann auch die Auskoppeltfläche 4 die Phosphorkonvertierungsschicht enthalten, so dass die Konvertierung des monochromatischen Lichts in Weißlich bzw. In Licht mit einer anderen Wellenlänge bei der Reflexion an der Auskoppelfläche stattfindet.

In einer Variante der erfindungsgemäßen Beleuchtungseinrichtung kann auch das Strahlbündel eines Lasers auf die Einkoppelfläche fallen. Der durch den Laser erzeugte Laserstrahl kann gegebenenfalls Ober eine geeignete Umlenkoptik auf die Einkoppelfläche gerichtet werden, so dass der Laser flexibel an verschiedenen Positionen angeordnet werden kann und nicht unmittelbar an der Elnkoppelfläche positioniert werden muss. Hierdurch kann der Bauraum für die Beleuchtungseinrichtung je nach Anwendung sfal effektiver genutzt werden.

Die im Vorangegangenen beschriebenen Ausführungsförmen der Erfindung weisen eine Reihe von Vorteilen auf. Insbesondere können im Einkopplungsbereich in den Lichtleiter wesentlich höhere Effizienzen aufgrund der hohen Leuchtdichte einer Laserlichtquelle erreicht werden und die Lichtausbreitung in dem Lichtleiter besser gesteuert werden. Dabei kann gezielt die Auskopplung Im Lichtleiter durch entsprechende Obertflächengestaltung der Auskoppelfläche beeinflusst werden und hierdurch ein homogener Lichtaustritt Ober die Austrittsfläche des Lichtleiters erreicht werden. Ferner kann durch die gezielte Positionierung von Phosphorkonvertierungsmaterial, beispielsweise auf der Auskoppelfläche, auf einfache Weise die durch die Beleuchtungseinrichtung erzeugte Lichtlarbe gesteuert werden. Aufgrund der hohen Leuchtdichte des eingestrahlten Laserlichts ist es ferner möglich, auch wesentlich längere Lichtleiter mit ausreichender Strohlintensität zu realisieren, als dies mit einer LED-Lichtquelle möglich ist.

## Patentansprüche

1. Beleuchtungseinrichtung für ein Kraftfahrzeug, umfassend einen Lichtleiter (1) zur totalreflektierenden Leitung von Licht entlang einer Lichtausbreitungsrichtung, wobei das Licht von zumindest einer Lichtquelle (2) stammt und über zumindest eine Einkoppelfläche (3) an einer Stirnseite des Lichtleiters (1) einkoppelbar ist, mit einer entlang der Lichtausbreitungsrichtung angeordneten Auskoppelfläche (4) zum Auskoppeln von Licht, welches an einer entlang der Lichtausbreitungsrichtung angeordneten Austrittsfläche (5) unter Aufhebung der Totalreflexionsbedingung aus dem Lichtleiter (1) austritt, wobei die zumindest eine Lichtquelle (2), deren Licht über die zumindest eine Einkoppelfläche (3) einkoppelbar ist, eine Laserlichtquelle ist, **dadurch gekennzeichnet, dass**
die Laserlichtquelle (1) eine punktförmige Lichtquelle ist, welche in Draufsicht eine maximale Ausdehnung von 20 µm oder weniger aufweist, und/oder dass eine Wandlereinrichtung zur Wandlung des Lichts der Laserlichtquelle (2) in eine punktförmige Lichtquelle vorgesehen ist, welche in Draufsicht eine maximale Ausdehnung von 20 µm oder weniger aufweist.

2. Beleuchtungseinrichtung nach Anspruch 1, **dadurch gekennzeichnet, dass** die Wandlereinrichtung eine Vorsatzoptik und/oder eine Phosphorkonvertierungsschicht umfasst, welche aus monochromatischem Laserlicht eine punktförmige Weißlichtquelle oder eine punktförmige Lichtquelle mit einer anderen Wellenlänge als das Laserlicht generiert.

3. Beleuchtungseinrichtung nach Anspruch 1 oder 2, **dadurch gekennzeichnet, dass** die punktförmige Lichtquelle (2) in Draufsicht eine emittierende Fläche von 0,0002 mm² oder weniger aufweist.

4. Beleuchtungseinrichtung nach einem der vorhergehenden Ansprüche, **dadurch gekennzeichnet, dass** die punktförmige Lichtquelle (2) in Draufsicht eine emittierende eckige Fläche aufweist, deren Kanten jeweils eine Länge von 20 µm oder weniger aufweisen.

5. Beleuchtungseinrichtung nach einem der vorhergehenden Ansprüche, **dadurch gekennzeichnet, dass** die punktförmige Lichtquelle (2) derart ausgestaltet ist, dass sie einen Lichtstrom von 100 Lm oder mehr und insbesondere von 200 Lm oder mehr generiert und/oder eine Strahlleistung von 1 Watt oder mehr und/oder eine Leuchtdichte von mindestens 10⁸ Cd/m² und insbesondere von 10⁹ Cd/m² und mehr aufweist.

6. Beleuchtungseinrichtung nach einem der vorhergehenden Ansprüche, **dadurch gekennzeichnet, dass** das Licht der Laserlichtquelle (2) an der zumindest einen Einkoppelfläche (3) des Lichtleiters (1) mit einem Kollimator in ein kollimiertes Lichtbündel gewandelt wird.

7. Beleuchtungseinrichtung nach Anspruch 6, **dadurch gekennzeichnet, dass** der Kollimator durch eine gewölbte Stirnseite (3) des Lichtleiters (1) gebildet wird, an der das Licht der Laserlichtquelle (2) gebeugt oder reflektiert wird.

8. Beleuchtungseinrichtung nach einem der vorhergehenden Ansprüche, **dadurch gekennzeichnet, dass** die Beleuchtungseinrichtung derart ausgestaltet ist, dass über eine Vorsatzoptik aus dem Licht der Laserlichtquelle (2) ein kollimierter Laserstrahl erzeugt wird, der über die vorzugsweise plane Einkoppelfläche (3) in den Lichtleiter (1) eingekoppelt wird, wobei der Laserstrahl vorzugsweise über eine Strahlumlenkung in den Lichtleiter (1) geleitet wird.

9. Beleuchtungseinrichtung nach einem der vorhergehenden Ansprüche, **dadurch gekennzeichnet, dass** die Laserlichtquelle (2) eine Laserdiode umfasst.

10. Beleuchtungseinrichtung nach einem der vorhergehenden Ansprüche, **dadurch gekennzeichnet, dass** die Laserlichtquelle (2) eine monochromatische Lichtquelle ist, deren Licht durch eine Phosphorkonvertierungsschicht in Weißlicht oder Licht mit einer anderen Wellenlänge als das Licht der monochromatischen Lichtquelle gewandelt wird, wobei die Phosphorkonvertierungsschicht insbesondere derart ausgebildet ist, dass sie vor der Stirnseite des Lichtleiters (1) angeordnet ist und/oder in einer Aussparung des Lichtleiters (1) angebracht ist und/oder an der Auskoppelfläche (3) des Lichtleiters (1) ausgebildet ist und/oder die Auskoppelfläche (3) bildet und/oder nach der Auskoppelfläche (3) außerhalb des Lichtleiters (1) angebracht ist.

11. Beleuchtungseinrichtung nach einem der vorhergehenden Ansprüche, **dadurch gekennzeichnet, dass** die Auskoppelfläche (4) ein Umlenkmittel (401) und insbesondere eine Prismenanordnung oder eine aufgeraute Oberfläche aufweist, über welches auf die Auskoppelfläche (4) treffendes Licht im Lichtleiter (1) zur Austrittsfläche (5) umgelenkt wird.

12. Beleuchtungseinrichtung nach Anspruch 11, **dadurch gekennzeichnet, dass** das Umlenkmittel derart ausgestaltet ist, dass die Intensität des über die Austrittsfläche (5) austretenden Lichts über die Lichtausbreitungsrichtung des Lichtleiters (1) im Wesentlichen konstant bleibt.

13. Beleuchtungseinrichtung nach einem der vorhergehenden Ansprüche, **dadurch gekennzeichnet, dass** die Austrittsfläche (5) des Lichtleiters (1) derart gewölbt ist, dass kollimiertes Licht aus der Austrittsfläche austritt.

14. Beleuchtungseinrichtung nach einem der vorhergehenden Ansprüche, **dadurch gekennzeichnet, dass** eine Umlenkanordnung, insbesondere ein Reflektor und/oder eine Linse, vorgesehen ist, welche aus dem aus der Austrittsfläche (5) austretendem Licht kollimiertes Licht erzeugt.

15. Beleuchtungseinrichtung nach einem der vorhergehenden Ansprüche, **dadurch gekennzeichnet, dass** der Lichtleiter (1) eine rechteckigen oder runden Querschnitt aufweist, wobei die maximale Ausdehnung des Querschnitts vorzugsweise 10 mm oder weniger beträgt oder wobei der Lichtleiter (1) vorzugsweise derart ausgestaltet sein, dass eine Kante im rechteckigen Querschnitt des Lichtleiters (1) eine Länge von 10 mm oder mehr aufweist, wohingegen die andere Kante eine Länge von 4 mm oder weniger aufweist,

16. Beleuchtungseinrichtung nach einer der vorhergehenden Ansprüche, **dadurch gekennzeichnet, dass** die Auskoppelfläche (4) und die Austrittsfläche (5) identisch sind.

17. Beleuchtungseinrichtung nach einem der vorhergehenden Ansprüche, **dadurch gekennzeichnet, dass** die Beleuchtungseinrichtung eine Signalleuchte und/oder einen Scheinwerfer umfasst.

18. Kraftfahrzeug, umfassend eine oder mehrere Beleuchtungseinrichtungen nach einem der vorhergehenden Ansprüche.

## Claims

1. Illumination device for a motor vehicle, comprising a light guide (1) for guiding light along a light propagation direction by total internal reflection, wherein the light originates from at least one light source (2) and is able to be coupled in via at least one input-coupling face (3) on a front side of the light guide (1), having an output-coupling face (4), arranged along the light propagation direction, for coupling out light that exits from the light guide (1) at an exit face (5) arranged along the light propagation direction with the removal of the total internal reflection condition, wherein the at least one light source (2), the light of which is able to be coupled in via the at least one input-coupling face (3), is a laser light source, **characterized in that**
the laser light source (1) is a point-shaped light source that has, in plan view, a maximum extent of 20 µm or less, and/or **in that** a converter device for the conversion of the light of the laser light source (2) into a point-shaped light source is provided that has, in plan view, a maximum extent of 20 µm or less.

2. Illumination device according to Claim 1, **characterized in that** the converter device comprises an attachment optical unit and/or a phosphor conversion layer that generates from monochromatic laser light a point-shaped white light source or a point-shaped light source having another wavelength as the laser light.

3. Illumination device according to Claim 1 or 2, **characterized in that** the point-shaped light source (2) has, in plan view, an emitting area of 0.0002 mm² or less.

4. Illumination device according to one of the preceding claims, **characterized in that** the point-shaped light source (2) has, in plan view, an emitting angular face having edges that in each case have a length of 20 µm or less.

5. Illumination device according to one of the preceding claims, **characterized in that** the point-shaped light source (2) is configured such that it generates a luminous flux of 100 Lm or more and in particular of 200 Lm or more and/or has a radiant power of 1 Watt or more and/or a luminance of at least 10⁸ Cd/m² and in particular of 10⁹ Cd/m².

6. Illumination device according to one of the preceding claims, **characterized in that** the light of the laser light source (2) is converted into a collimated light beam at the at least one input-coupling face (3) of the light guide (1) with a collimator.

7. Illumination device according to Claim 6, **characterized in that** the collimator is formed by a curved front side (3) of the light guide (1) at which the light of the laser light source (2) is diffracted or reflected.

8. Illumination device according to one of the preceding claims, **characterized in that** the illumination device is configured such that a collimated laser beam that is coupled into the light guide (1) via the preferably planar input-coupling face (3) is generated from the light of the laser light source (2) using an attachment optical unit, wherein the laser beam is preferably guided into the light guide (1) via a beam deflection.

9. Illumination device according to one of the preceding claims, **characterized in that** the laser light source (2) comprises a laser diode.

10. Illumination device according to one of the preceding claims, **characterized in that** the laser light source (2) is a monochromatic light source, the light of which is converted into white light or light having a different wavelength than the light of the monochromatic light source using a phosphor conversion layer, wherein the phosphor conversion layer is formed in particular such that it is arranged upstream of the front side of the light guide (1) and/or is arranged in a cutout of the light guide (1) and/or is formed on the output-coupling face (3) of the light guide (1) and/or forms the output-coupling face (3) and/or is arranged downstream of the output-coupling face (3) outside the light guide (1).

11. Illumination device according to one of the preceding claims, **characterized in that** the output-coupling face (4) has a deflection means (401) and in particular a prism arrangement or a roughened surface via which light that is incident on the output-coupling face (4) in the light guide (1) is deflected in the direction of the exit face (5).

12. Illumination device according to Claim 11, **characterized in that** the deflection means is configured such that the intensity of the light exiting via the exit face (5) substantially remains constant over the light propagation direction of the light guide (1).

13. Illumination device according to one of the preceding claims, **characterized in that** the exit face (5) of the light guide (1) is curved such that collimated light exits from the exit face.

14. Illumination device according to one of the preceding claims, **characterized in that** a deflection arrangement, in particular a reflector and/or a lens, which generates collimated light from the light exiting from the exit face (5) is provided.

15. Illumination device according to one of the preceding claims, **characterized in that** the light guide (1) has a rectangular or round cross section, wherein the maximum extent of the cross section is preferably 10 mm or less and wherein the light guide (1) is preferably configured such that an edge in the rectangular cross section of the light guide (1) has a length of 10 mm or more, whereas the other edge has a length of 4 mm or less.

16. Illumination device according to one of the preceding claims, **characterized in that** the output-coupling face (4) and the exit face (5) are identical.

17. Illumination device according to one of the preceding claims, **characterized in that** the illumination device comprises a signal lamp and/or a headlamp.

18. Motor vehicle comprising one or more illumination devices according to one of the preceding claims.

## Revendications

1. Dispositif d'éclairage destiné à un véhicule automobile, comprenant un guide d'ondes lumineuses (1) servant au guidage par réflexion totale de la lumière dans une direction de propagation de la lumière, dans lequel la lumière provient d'au moins une source de lumière (2) et peut être injectée par l'intermédiaire d'au moins une surface d'injection (3) sur une face frontale du guide d'ondes lumineuses (1), comprenant une surface d'extraction (4) agencée dans la direction de propagation de la lumière pour l'extraction de la lumière qui sort du guide d'ondes lumineuses (1) sur une surface de sortie (5) agencée dans la direction de propagation de la lumière, en supprimant la condition de réflexion totale, dans lequel ladite au moins une source de lumière (2), dont la lumière peut être injectée par l'intermédiaire de ladite au moins une surface d'injection (3), est une source de lumière laser, **caractérisé en ce que**
la source de lumière laser (1) est une source de lumière ponctuelle dont l'extension maximale est égale ou inférieure à 20 µm en vue de dessus, et/ou **en ce qu'**il est prévu un dispositif de conversion servant à convertir la lumière de la source de lumière laser (2) en une source de lumière ponctuelle dont l'extension maximale est égale ou inférieure à 20 µm en vue de dessus.

2. Dispositif d'éclairage selon la revendication 1, **caractérisé en ce que** le dispositif de conversion comprend une optique additionnelle et/ou une couche de conversion phosphorescente qui génère à partir d'une lumière laser monochromatique une source ponctuelle de lumière blanche ou une source ponctuelle de lumière ayant une longueur d'onde différente de celle de la lumière laser.

3. Dispositif d'éclairage selon la revendication 1 ou 2, **caractérisé en ce que** la source de lumière ponctuelle (2) présente une surface d'émission de 0,0002 mm² ou moins en vue de dessus.

4. Dispositif d'éclairage selon l'une des revendications précédentes, **caractérisé en ce que** la source de lumière ponctuelle (2) présente une surface émettrice anguleuse en vue de dessus, dont les bords présentent chacun une longueur de 20 µm ou moins.

5. Dispositif d'éclairage selon l'une des revendications précédentes, **caractérisé en ce que** la source de lumière ponctuelle (2) est conçue de manière à ce qu'elle génère un flux lumineux de 100 Lm ou plus et en particulier de 200 Lm ou plus et/ou présente une puissance de faisceau de 1 Watt ou plus et/ou une luminance d'au moins 10⁸ Cd/m² et en particulier de 10⁹ Cd/m² et plus.

6. Dispositif d'éclairage selon l'une des revendications précédentes, **caractérisé en ce que** la lumière de la source de lumière laser (2) est convertie au moyen d'un collimateur en un faisceau de lumière collimaté sur ladite au moins une surface d'injection (3) du guide de lumière (1).

7. Dispositif d'éclairage selon la revendication 6, **caractérisé en ce que** le collimateur est formé par une face frontale incurvée (3) du guide d'ondes lumineuses (1), sur laquelle est diffractée ou réfléchie la lumière de la source de lumière laser (2).

8. Dispositif d'éclairage selon l'une des revendications précédentes, **caractérisé en ce que** le dispositif d'éclairage est conçu de manière à ce qu'un faisceau laser collimaté soit généré par l'intermédiaire d'une optique additionnelle à partir de la lumière de la source de lumière laser (2), lequel faisceau est injecté dans le guide d'ondes lumineuses (1) par l'intermédiaire de la surface de couplage (3), de préférence plane, dans lequel le faisceau laser est de préférence guidé dans le guide d'ondes lumineuses (1) par l'intermédiaire d'un déflecteur de faisceau.

9. Dispositif d'éclairage selon l'une des revendications précédentes, **caractérisé en ce que** la source de lumière laser (2) comprend une diode laser.

10. Dispositif d'éclairage selon l'une des revendications précédentes, **caractérisé en ce que** la source de lumière laser (2) est une source de lumière monochromatique dont la lumière est convertie par une couche de conversion phosphorescente en lumière blanche ou en lumière ayant une longueur d'onde différente de celle de la lumière de la source de lumière monochromatique, dans lequel la couche de conversion phosphorescente est en particulier réalisée de manière à ce qu'elle soit agencée devant la face frontale du guide d'ondes lumineuses (1) et/ou soit montée dans un évidement du guide d'ondes lumineuses (1) et/ou soit réalisée sur la surface d'extraction (3) du guide d'ondes lumineuses (1) et/ou forme la surface d'extraction (3) et/ou soit montée à l'extérieur du guide d'ondes lumineuses (1) après la surface d'extraction (3).

11. Dispositif d'éclairage selon l'une des revendications précédentes, **caractérisé en ce que** la surface d'extraction (4) comporte un moyen de déviation (401) et en particulier un agencement de prisme ou une surface rugueuse, par l'intermédiaire duquel la lumière incidente sur la surface d'extraction (4) est déviée vers la surface de sortie (5) dans le guide d'ondes lumineuses (1) .

12. Dispositif d'éclairage selon la revendication 11, **caractérisé en ce que** le moyen de déviation est conçu de manière à ce que l'intensité de la lumière émanant de la surface de sortie (5) reste sensiblement constante dans la direction de propagation de la lumière du guide d'ondes lumineuses (1).

13. Dispositif d'éclairage selon l'une des revendications précédentes, **caractérisé en ce que** la surface de sortie (5) du guide d'ondes lumineuses (1) est incurvée de telle manière que de la lumière collimatée sorte de la surface de sortie.

14. Dispositif d'éclairage selon l'une des revendications précédentes, **caractérisé en ce qu'**il est prévu un dispositif de déviation, en particulier un réflecteur et/ou une lentille, qui génère de la lumière collimatée à partir de la lumière sortant de la surface de sortie (5).

15. Dispositif d'éclairage selon l'une des revendications précédentes, **caractérisé en ce que** le guide d'ondes lumineuses (1) présente une section transversale rectangulaire ou ronde, dans lequel l'extension maximale de la section transversale est de préférence inférieure ou égale à 10 mm, ou dans lequel le guide d'ondes lumineuses (1) est de préférence conçu de manière à ce qu'un bord de la section rectangulaire du guide d'ondes lumineuses (1) présente une longueur de 10 mm ou plus, tandis que l'autre bord présente une longueur de 4 mm ou moins.

16. Dispositif d'éclairage selon l'une des revendications précédentes, **caractérisé en ce que** la surface d'injection (4) et la surface de sortie (5) sont identiques.

17. Dispositif d'éclairage selon l'une des revendications précédentes, **caractérisé en ce que** le dispositif d'éclairage comprend un feu de signalisation et/ou un projecteur.

18. Véhicule automobile comportant un ou plusieurs dispositifs d'éclairage selon l'une des revendications précédentes.
